# EUROPÄISCHE PATENTSCHRIFT

(11) **EP 0 452 443 B1**
(45) Veröffentlichungstag und Bekanntmachung des Hinweises auf die Patenterteilung: **09.03.1994**
(21) Anmeldenummer: 90915452.8
(22) Anmeldetag: 10.10.1990
(51) Int. Cl.: G01N 27/90

(54) **ROTIERKOPF ZUM ABTASTEN VON METALLISCHEM PRÜFGUT**
ROTARY HEAD FOR SCANNING METAL TO BE TESTED
TETE ROTATIVE D'ANALYSE D'ECHANTILLON DE PRODUIT METALLIQUE

(30) Priorität: 09.11.1989 DE 3937261
(43) Veröffentlichungstag der Anmeldung: 23.10.1991
(73) Patentinhaber: Institut Dr. Friedrich Förster Prüfgerätebau GmbH & Co. KG, 72766 Reutlingen (DE)
(72) Erfinder: GEWEKE, Werner, D-7410 Reutlingen (DE)
(74) Vertreter: Beier, Joachim, Dipl.-Ing
(86) Internationale Anmeldenummer: EP9001696
(87) Internationale Veröffentlichungsnummer: WO9107656

(56) Entgegenhaltungen:
- DE-A- 2 905 399
- DE-A- 3 228 382
- US-A- 3 299 349
- US-A- 4 596 953
- US-A- 4 673 879

## Beschreibung

Die Erfindung betrifft einen Rotierkopf zum Abtasten der Oberfläche von langgestrecktem metallischem Prüfgut durch Wirbelstromgeber gemäß dem Oberbegriff von Patentanspruch 1.

Derartige Rotierköpfe sind in der zerstörungsfreien Werkstoffprüfung seit langem bekannt siehe etwa US-A-4,596,953 oder DE-A-29 05 399 und in vielfältigem Einsatz. Sie dienen dort zur Prüfung von insbesondere blankem Rundmaterial aus Stahl und Nichteisenmetallen auf bis an die Oberfläche reichende Fehler. Im Laufe der langen Einsatzzeit haben diese Rotierköpfe einen hohen Entwicklungsstand erreicht, der sie zu ansehnlichen Leistungen befähigt. So lassen sich z.B. bei blanken Oberflächen Risse mit einer Tiefe von nur 30 Mikrometer noch sicher nachweisen und dies bei recht hohen Durchlaufgeschwindigkeiten. Andererseits sind Grenzen erkennbar, deren Überschreitung wünschenswert wäre, weil sie zur Erschließung neuer Anwendungsgebiete führen würde. So ist z.B. eine empfindliche Prüfung von "nicht blankem" ferromagnetischen Stahl mit den derzeit bekannten Wirbelstromrotierköpfen nicht möglich wegen des hohen materialbedingten Störpegels. Ein anderes Beispiel betrifft Risse in ferromagnetischem Material, bei denen eine nachfolgende Verarbeitung, wie etwa das Walzen, Ziehen oder Schälen, oberhalb der Materialtrennung wieder eine geschlossene Oberfläche entstehen ließ. Hier ist es die geringe Eindringtiefe der Wirbelströme bei den für die gewünschte Empfindlichkeit benötigten hohen Frequenzen, die eine Anzeige von solchen "verschmierten" Rissen in den meisten Fällen unmöglich macht. Ein anderer Grenzfall ist die Prüfung geschweißter austenitischer Rohre, wo ferritsche Verunreinigungen einen hohen Störpegel im Bereich der Schweißnaht hervorrufen und auf diese Weise eine wirksame Prüfung der letzteren verhindern.

Die US-A-3,299,349 offenbart darüberhinaus einen Prüfkopf zum Abtasten der Oberfläche von langgestrecktem Prüfgut mit zwei Magnetisierungsspulen zum Magnetisieren des Prüfguts und mit zwischen den Magnetisierungsspulen um den Umfang der Prüfguts verteilten Sensorspulen, die den Streufluß an Fehlstellen der Materialoberfläche des Prüfguts, das durch den Ring von Sensorspulen hindurchbewegt wird, detektieren.

Demgegenüber stellt sich die Erfindung die Aufgabe, den Rotierkopf der eingangs definierten Art so zu verbessern, daß sein Einsatz in den obengeannten und in weiteren Fällen möglich wird.

Diese Aufgabe wird gelöst durch einen Rotierkopf, der gemäß Anspruch 1 gekennzeichnet ist.

Die durch die erfindungsgemäße Lösung ermöglichte Magnetisierung des Prüfgutes hat eine wesentliche Reduzierung der magnetischen Permeabilität des Prüfgutes im vorgesehenen Prüfbereich zur Folge, insbesondere wenn es gelingt, bis in den Sättigungsbereich zu gelangen. Dabei besteht jedoch die Gefahr, daß die Ferritkerne der Wirbelstromgeber ebenfalls in die Sättigung kommen und daß damit die Empfindlichkeit der letzteren eine unzulässige Beeinträchtigung erfährt. Dem wird entgegengewirkt durch den Ring aus magnetisch leitendem Material, der zwischen der Magnetisierungsspule und den Wirbelstromgebern angeordnet ist. Er homogenisiert das Magnetfeld im Prüfbereich und bewirkt, daß die radiale Komponete des Magnetfeldes oberhalb der Prüfteiloberfläche klein bleibt. Durch die Reduzierung der magnetischen Permeabilität des Prüfgutes erzielt man eine weitgehende Unterdrückung aller durch magnetische Inhomogenitäten der Materialoberfläche bedingten Störquellen wie z.B. solcher, die auf der Anwesenheit von Zunder, Wärmezonen, Schweißnähten oder Kaltverfestigungen beruhen. Erstmals gelingt es, mit großer Empfindlichkeit auch "nicht blankes" ferromagnetisches Material mit rotierenden Wirbelstromsonden zu prüfen. Bei "verschmierten Rissen", also solcher mit geschlossener Oberfläche, bewirkt die starke Reduzierung der magnetischen Permeabilität, die einen Faktor 50 oder mehr betragen kann, eine entsprechende Erhöhung der Eindringtiefe der Wirbelströme und läßt so Fehler detektierbar werden, die früher verborgen geblieben sind. Zum ersten Male werden auch geschweißte austenitische Rohre voll von der Prüfung mit Wirbelstromrotierköpfen erfaßbar, da durch die Reduzierung der magnetischen Permeabilität der Einfluß der ferritischen Verunreinigungen zum Ver schwinden gebracht werden kann.

Eine Ausgestaltung der Erfindung sieht vor, daß vom Gehäuse getragene, auswechselbare Schutzbuchsen mit an den Durchmesser des Prüfgutes anpaßbarer Bohrung als Magnetflußleiter dienen. Nach einer anderen Ausgestaltung ragt eine solche Schutzbuchse in die Bohrung der Hohlwelle hinein, so daß der Magnetfluß optimal über die rotierende Hohlwelle in das Prüfgut hineingeleitet werden kann. Eine weitere Ausgestaltung gibt die Anregung, daß zwischen Schutzbuchse und Hohlwelle an wenigstens einer Stelle ein enger Luftspalt besteht, so daß eine verlustarme Überleitung des Magnetflusses möglich wird. Nach einer besonders vorteilhaften Ausgestaltung der Erfindung deckt der Homogenisierungsring die den Wirbelstromgebern zugewandte Seite der Magnetisierungsspule bis zu einem solchen Abstand von der Rotationsachse ab, der etwa dem doppelten maximalen radialen Abstand der Wirbelstromgeber von der Rotationsachse entspricht. Ein wichtiger Aspekt der Erfindung ist es, daß der Homogenisierungsring in magnetisch leitender Verbindung mit den den Magnetfluß leitenden Teilen des Gehäuses steht. Nach einem weiteren Aspekt der Erfindung sind die Schutzbuchsen ganz oder teilweise mit einer dünnen Schicht aus magnetisch nichtleitendem Material ausgekleidet. Dadurch wird ein "Ankleben" von magnetisiertem ferromagnetischem Prüfgut an den Schutzbuchsen verhindert und ein leichtes Durchlaufen der letzteren sichergestellt. Ein anderer Aspekt der Erfindung besagt, daß der Rotierteil eine mit der Hohlwelle fest verbundene Rotierscheibe aufweist, an der die Wirbelstromgeber aufgehängt sind, und die aus magnetisch nichtleitendem Material besteht. Damit wird verhindert, daß sich an der Scheibe Magnetpole bilden und in angrenzenden Gehäuseteilen Wirbelströme hervorrufen, die Erwärmung und Bremswirkung zur Folge hätten. Ein wesentlicher Aspekt der Erfindung ist es, daß im vom Magnetfeld durchsetzten Prüfbereich zusätzlich eine feststehende Wirbelstromgeberanordnung eingebaut ist, die ihren Platz im Inneren einer Schutzbuchse gefunden haben kann. Hierdurch wird die Raum- und Aufwand sparende Kombination von feststehenden und umlaufenden Wirbelstromgebern in einfacher Weise möglich gemacht. Dabei erweist es sich als ganz besonders vorteilhaft, daß beide gemeinsam zur Senkung des Störpegels dieselbe Gleichstromvormagnetisierung benutzen können. Bei der feststehenden Wirbelstromgeberanordnung kann es sich sowohl um Absolut- als auch um Differenzdurchlaufspulen handeln. Ebenso können aber auch über den Umfang verteilte Segmentspulen vorgesehen sein. Absolutspulen machen neben den vielfältigen Fehlerprüfmöglichkeiten nun auch Materialverwechslungen erfaßbar. Differenzdurchlaufspulen sind besonders geeignet zur Auflösung von außenliegenden Querfehlern, von Lochfehlern in Rohren und von Fremdmaterialeinschlüssen. In idealer Weise können sich so die verschiedenen Systeme gegenseitig ergänzen. Darüber hinaus können aber auch bei ferromagnetischem Material statt der Wirbelstromdurchlaufspulen Streuflußspulen eingesetzt werden. Diese sind ähnlich oder gleich aufgebaut, wie die Wirbelstromlaufspulen, ja es können sogar die gleichen Spulen für den simultanen Empfang von Wirbelstrom- und Streuflußsignalen zum Einsatz kommen. Dabei hat die Gleichstromvormagnetisierung neben der oben beschriebenen die zusätzliche Aufgabe, an Fehlerstellen einen magnetischen Streufluß zu erzeugen, der von den oben genannten Spulen aufgenommen wird. Es ergibt sich so eine weitere Herabsetzung der Nachweisgrenze für Querrisse. Neben den Aussenfehlern werden auch Innenfehler detektierbar. Lokale Wandeinschnürungen können aufgespürt werden.

Im folgenden soll die Erfindung an Hand von Figuren durch Ausführungsbeispiele näher erläutert werden. Es zeigen im einzelnen:
- Figur 1: einen Rotierkopf im Schnitt
- Figur 2: den gleichen Rotierkopf in Vorderansicht
- Figur 3: ein Einzelteil des Rotierkopfes in einer alternativen Ausführung und in einem anderen Maßstab

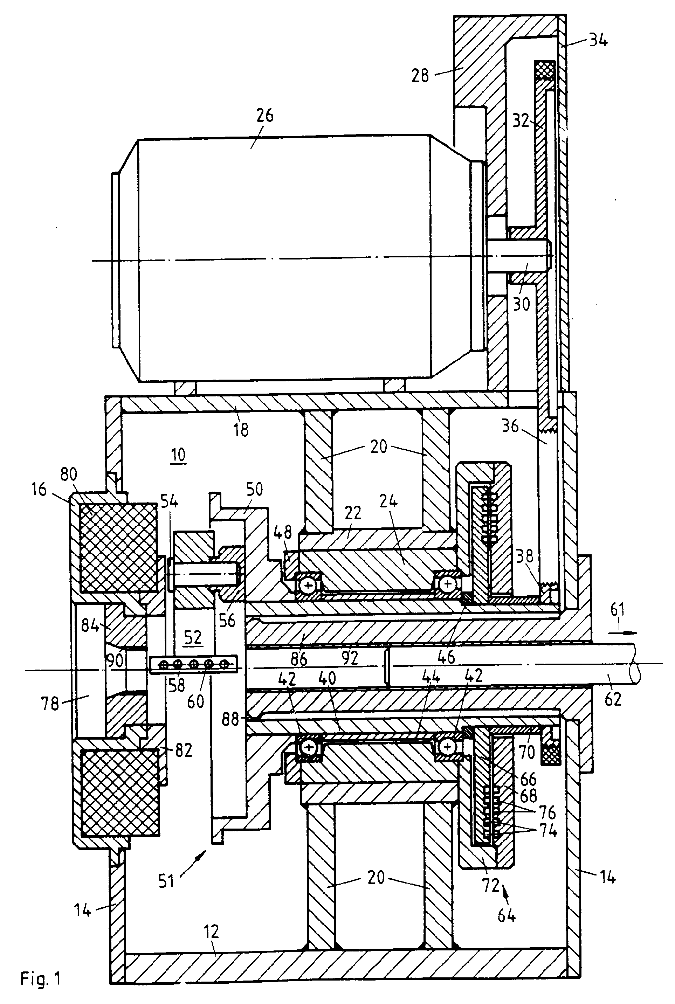

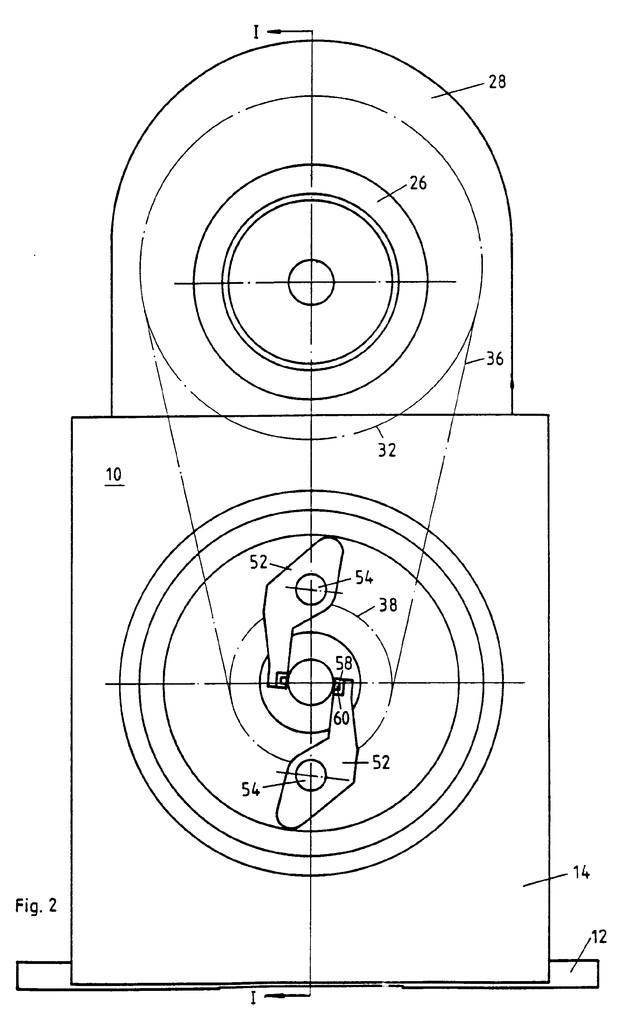

In den Figuren 1 und 2 ist in einem Schnitt beziehungsweise in Vorderansicht ein Rotierkopf dargestellt. Ein Gehäuse 10 das sich aus einer Grundplatte 12, Wänden 14, einem Gehäuseteller 16, einer Deckplatte 18, Holmen 20, einem Aufnahmekörper 22 und einem Lagerkörper 24 zusammensetzt, bildet den tragenden Bestandteil des Rotierkopfes. Die genannten Teile des Gehäuses 10 sind aus ferromagnetischem Stahl hergestellt und durch Schweißung oder andere geeignete Mittel miteinander verbunden. Die Deckplatte 18 trägt einen Antriebsmotor 26, der durch eine Flanschplatte 28 abgesichert ist. Die Rotationsbewegung des Motors 26 wird von einer Treibwelle 30 auf ein Antriebsrad 32 übertragen, das gegen Zugriff durch einen Deckel 34 geschützt ist. Ein Treibriemen 36 übermittelt die Antriebskraft einem mit einer Hohlwelle 40 starr verbunden Treibrad 38. Die Hohlwelle 40 ist am Lagerkörper 24 durch zwei geeignete Kugellager 42 gelagert, die sich über eine ferromagnetische Stützbüchse 44 gegeneinander abstützen und durch Befestigungsringe 46 und 48 an der Hohlwelle 40 beziehungsweise am Lagerkörper 24 festgelegt sind. Der Luftspalt zwischen dem letzteren und der Stützbüchse 44 ist schmal dimensioniert, damit der Magnetfluß beim Übergang vom einen zum anderen eine möglichst geringe Behinderung erfährt. Eine Rotierscheibe 50 aus Leichtmetall ist starr an der Hohlwelle 40 fixiert. Sie bildet zusammen mit der Hohlwelle 40 und dem Treibrad 38 das Rotierteil 51. Zwei Sondenhebel 52 sind durch Bolzen 54 und um die letzteren schwenkbar in Lagerklötzen 56 gelagert, die an der Rotierscheibe 50 befestigt sind. Der Übersichtlichkeit halber ist in Figur 1 nur einer der beiden Sondenhebel 52 abgebildet. Am vorderen Ende der Sondenhebel 52 ist ein Sondenbalken 58 angebracht, der jeweils fünf Wirbelstromgeber 60 trägt. Diese befinden sich im Betriebsfall in unmittelbarer Nachbarschaft zur Oberfläche des Prüfgutes und tasten dieselbe in spiraligen Bahnen ab, wenn bei umlaufendem Rotierteil 51 der Rotierkopf vom Prüfgut durchlaufen wird. Als Beispiel für ein Prüfgut ist in Figur 1 eine den Rotierkopf in Richtung von Pfeil 61 verlassende Stange 62 dargestellt. Die Signale der rotierenden Wirbelstromgeber 60 gelangen über eine Rotierübertrageranordnung 64 nach außen und sind über ein Kabel an eine elektronische Auswerteeinrichtung (beide nicht abgebildet) angeschlossen. Bei der Rotierübertrageranordnung kann es sich um eine solche handeln, wie sie in der parallellaufenden Patentanmeldung P 36 32 395 ausführlich beschrieben ist. Sie besteht aus einer Rotorscheibe 66 und einer Statorscheibe 68, erstere mit der Hohlwelle 40 starr verbunden und durch eine Büchse 70 abgesichert, letztere über einen Tragteller 72 am Aufnahmekörper 22 befestigt und in enger Nachbarschaft zu Rotierscheibe 66 angeordnet. Die Ausgänge der Wirbelstromgeber 60 sind mit in die Rotorscheibe 66 eingelassenen Primärwickelungen 74 verbunden, während in die Statorscheibe 68 eingelassene Sekundärwicklungen 76 über eine nicht abgebildete Steckverbindung zum oben genannten Kabel geführt sind.

Der Gehäuseteller 16, der in Figur 2 wegen des Durchblicks auf die Sondenhebel 52 weggelassen ist, hat eine doppelte Aufgabe zu erfüllen. Er verschließt zum einen die Öffnung in der vorderen Wand 14 bis auf einen Durchlaß 78 für das Prüfgut 62, er bietet zum anderen Raum für die Aufnahme einer Magnetisierungsspule 80. Diese kann als freitragender Wickel hergestellt sein, der in den dafür vorgesehenen Raum des Gehäusetellers 16 eingeschoben ist und von einem Homogenisierungsring 82 gehaltert wird. Über eine zusätzliche Bedeutung des Homogenisierungsringes 82 wird weiter unten noch berichtet. In den Durchlaß 78 des Gehäusetellers 16 ist eine vordere Schutzbuchse 84 eingesetzt. Eine rückwärtige Schutzbuchse 86 ist an der hinteren Wand 14 befestigt und ragt in die Bohrung der Hohlwelle 40 hinein. Aufgabe der beiden Schutzbuchsen 84, 86 ist es, das Prüfgut 62 sicher zu führen und die empfindlichen Wirbelstromgeber 60 vor Beschädigung durch einlaufendes Prüfgut zu schützen. Darüber hinaus leisten die Schutzbuchsen 84,86 die aus magnetisch leitendem Material bestehen einen wichtigen Beitrag bei der Weiterleitung des Magnetflusses. Die rückwärtige Schutzbuchse 86 weist zu diesem Zweck an ihrem vorderen Ende einen begrenzten Bereich mit einem nur geringfügig kleineren Durchmesser als dem der Bohrung der Hohlwelle 40 auf, so daß hier ein enger Luftspalt 88 mit kleinem magnetischem Widerstand entsteht. Die Schutzbuchsen 84, 86 sind auswechselbar und stehen mit einer eng gestaffelten Auswahl von Bohrungen zur Verfügung. Dadurch wird zum einen eine exakte Führung des Prüfgutes 62, zum anderen eine wirksame Einleitung des Magnetflusses in das Prüfgut gewährleistet. Der in der Magnetisierungsspule 80 erzeugte Magnetfluß nimmt seinen Weg über Gehäuseteller 16, vordere Wand 14, Grundplatte 12 beziehungsweise Deckplatte 18 oder die seitlichen Wände, über die Holmen 20, Aufnahmekörper 22, Lagerkörper 24, Stützbüchse 44 und Hohlwelle 40. Die unmittelbare Einleitung des Magnetflusses in das Prüfgut 62 erfolgt, wie schon gesagt, über die Schutzbuchsen 84, 86.

Die Bohrungen der Schutzbuchsen 84, 86 sind jeweils ausgekleidet durch eine dünne Schicht aus magnetisch nichtleitendem Material. Im vorliegenden Beispiel sind abriebfeste Hülsen 90 beziehungsweise 92 vorgesehen. Man erreicht damit, daß magnetisiertes ferromagnetisches Prüfgut nicht im Inneren der Schutzbuchsen 84, 86 "anklebt" und ohne großen Widerstand durch den Rotierkopf gezogen werden kann. Der Prüfbereich, in dem das Prüfgut 62 voll magnetisiert wird, wird im wesentlichen begrenzt durch die Enden der beiden Schutzbuchsen 84, 86. Der magnetische Fluß im Prüfbereich sollte möglichst homogen sein und insbesondere sollte im Raum oberhalb des Prüfgutes 62, wo sich die Wirbelstromgeber 60 befinden, die radiale Komponente des Magnetfeldes sich in engen Grenzen halten. Dies erreicht durch die Einführung des Homogenisierungsringes 82, der einen großen Teil der Feldlinien bindet, die sich sonst ausgehend von der Flanke der Magnetisierungsspule 80, unmittelbar zum Prüfgut 62 oder zur rückwärtigen Schutzbuchse 86 schliessen würden. Damit diese Maßnahme auch im ungünstigen Betriebsfall, also beim größten vorgesehenen Prüfgutdurchmesser, noch zum Tragen kommt, empfiehlt es sich die Magnetisierungsspule 80 bis zu einem solchen Abstand von der Rotationsachse durch den Homogenisierungsring abzudecken, der etwa dem doppelten maximalen radialen Abstand der Wirbelstromgeber 60 von der Rotationsachse entspricht.

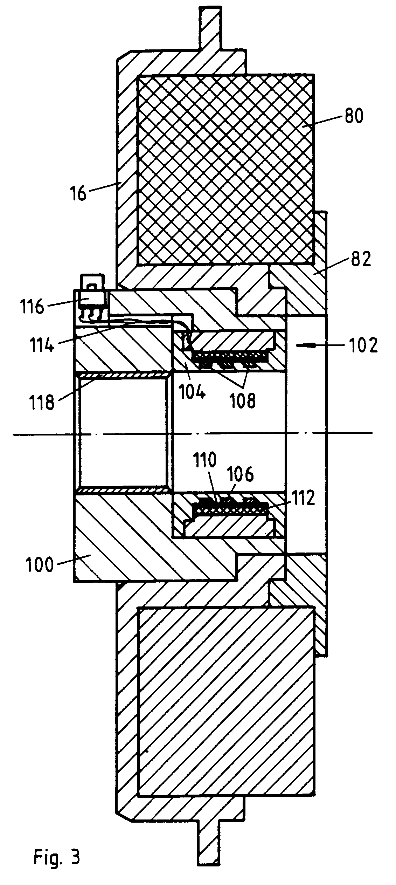

Figur 3 betrifft den Fall, daß zusätzlich zu den rotierenden Wirbelstromgebern 60 noch feststehende Wirbelstromgeber im Prüfbereich eingesetzt sind. Dazu hat die vordere Schutzbuchse eine andere Ausbildung erfahren. Da alle übrigen Teile des Rotierkopfes unverändert beibehalten werden, ist lediglich eine solche Schutzbuchse 100, eingebaut in den Gehäuseteller 16, wiedergegeben. Der letztere kann, wie zuvor beschrieben, in einem Rotierkopf gemäß der Figuren 1 und 2 verwendet werden. Die Schutzbuchse 100 ist auf der rechten Seite tiefer ausgedreht. Im freigewordenen Raum ist die feststehende Wirbelstromgeberanordnung 102 untergebracht. Diese weist einen Spulenkörper 104 aus einem geeigneten isolierenden Werkstoff auf. Im Boden des Spulenkörpers 104 befinden sich drei Nuten, in die jeweils Wirbelstromempfängerspulen 106, 108 eingelegt sind. Von diesen kann die mittlere eine Absolutspule 106 sein, während die beiden äußeren (108) in Differenz geschaltet sein können. Auf die Empfängerspulen 106, 108 und von ihnen getrennt durch eine Isolierschicht 110, ist eine Wirbelstromerregerspule 112 gewickelt. Anschlußdrähte 114 verbinden die Empfängerspulen 106, 108 und die Erregerspule 112 mit einer Anschlußdose 116, die den Anschluß der feststehenden Wirbelstromgeberanordnung 102 an eine elektronische Auswerteeinheit ermöglicht. Wie die beiden oben beschriebenen Schutzbuchsen 84, 86, ist auch die Schutzbuchse 100 durch eine dünne Hülse 118 gegen ein magnetisches "Verkleben" geschützt.

Statt der beschriebenen, das Prüfteil 62 umfassenenden Wirbelstromgeberanordnung 102 kann in dem für sie vorgesehenen Raum in der Schutzbuchse 100 auch ein über den Umfang verteilter Satz von Wirbelstromsegmentspulen eingebaut sein. Es ist auch möglich, die beschriebene Geberanordnung 102 als Streuflußgeber einzusetzen. Der von Magnetisierungsspule 80 hervorgerufene Magnetfluß im Prüfgut 62 ruft an Fehlerstellen magnetische Streuflüsse hervor. Diese können z.B. von Spule 106 aufgenommen und in bekannter Weise weiterverarbeitet werden.

## Patentansprüche

1. Rotierkopf zum Abtasten der Oberfläche von langgestrecktem metallischem Prüfgut (62) durch Wirbelstromgeber (60), mit einem Gehäuse (10), mit einem umlaufenden Rotierteil (51), an dem die Wirbelstromgeber (60) befestigt sind und der eine zum Durchlaß des Prüfgutes (62) geeignete am Gehäuse (10) gelagerte Hohlwelle (40) aufweist, mit Antriebsmitteln (26) zum Erzeugen der Umlaufbewegung des Rotierteils (51) und mit einer Rotierübertrageranordnung (64), durch die die Wirbelstromgeber (60) mit einer elektronischen Auswerteeinheit elektrisch verbunden sind, dadurch gekennzeichnet,
daß Magnetisierungsmittel zur Magnetisierung des Prüfgutes (62) in dessen Längsrichtung innerhalb eines vorgesehenen Prüfbereiches bereitgestellt werden, mit einer das Prüfgut (62) umfassenden Magnetisierungsspule (80) zum Erzeugen eines Magnetflusses und mit Magnetflußleitern, die den Magnetfluß in das Prüfgut (62) hineinleiten,
daß als Magnetflußleiter entsprechend dimensionierte Teile des Gehäuses (10) und die Hohlwelle (40), die jeweils aus magnetisch leitendem Material hergestellt sind, benutzt werden und daß zur Homogenisierung des Magnetfeldes im Prüfbereich ein das Prüfgut (62) umfassender Homogenisierungsring (82) aus magnetisch leitendem Material zwischen der Magnetisierungsspule (80) und den Wirbelstromgebern (60) angeordnet ist.

2. Rotierkopf nach Anspruch 1, dadurch gekennzeichnet,
daß als Magnetflußleiter ferner vom Gehäuse (10) getragene, auswechselbare Schutzbuchsen (84, 86, 100) aus magnetisch leitendem Material mit an den Durchmesser des Prüfgutes (62) anpaßbarer Bohrung dienen.

3. Rotierkopf nach Anspruch 2, dadurch gekennzeichnet,
daß eine der Schutzbuchsen (86) in die Bohrung der Hohlwelle (40) hineinragt.

4. Rotierkopf nach Anspruch 3, dadurch gekennzeichnet,
daß zwischen Schutzbuchse (86) und Hohlwelle (40) an wenigstens einer Stelle ein enger Luftspalt (88) zur Überleitung des Magnetflusses besteht.

5. Rotierkopf nach einem der vorhergehenden Ansprüche, dadurch gekennzeichnet,
daß der Homogenisierungsring (82) die den Wirbelstromgebern (60) zugewandte Seite der Magnetisierungsspule (80) bis zu einem solchen Abstand von der Rotationsachse abdeckt, der etwa dem doppelten maximalen radialen Abstand der Wirbelstromgeber (60) von der Rotierachse entspricht.

6. Rotierkopf nach einem der vorhergehenden Ansprüche, dadurch gekennzeichnet,
daß der Homogenisierungsring (82) in magnetisch leitender Verbindung mit den den Magnetfluß leitenden Teilen des Gehäuses (10) steht.

7. Rotierkopf nach einem der vorhergehenden Ansprüche, dadurch gekennzeichnet,
daß die Schutzbuchsen (84, 86, 100) in ihrer Bohrung ganz oder teilweise mit einer dünnen Schicht (90, 92, 118) aus magnetisch nicht leitendem Material ausgekleidet sind.

8. Rotierkopf nach einem der vorhergehenden Ansprüche, dadurch gekennzeichnet,
daß der Rotierteil (51) eine mit der Hohlwelle (40) fest verbundene Rotierscheibe (50) aufweist, an der die Wirbelstromgeber (60) aufgehängt sind und die aus magnetisch nichtleitendem Material besteht.

9. Rotierkopf nach einem der vorhergehenden Ansprüche, dadurch gekennzeichnet
daß im vom Magnetfluß durchsetzten Prüfbereich zusätzlich eine feststehende Wirbelstromgeberanordnung (102) eingebaut ist.

10. Rotierkopf nach Anspruch 9, dadurch gekennzeichnet,
daß die feststehende Wirbelstromgeberanordnung (102) im Innern einer Schutzbuchse (100) eingebaut ist.

## Claims

1. Rotary head for scanning the surface of elongated, metallic test material (62) by eddy current transducers (60) having a housing (10), a rotating rotary part (51) to which the eddy current transducers (60) are fixed and a hollow shaft (40) mounted on the housing (10) and suitable for the passage of the test material (62), with drive means (26) for producing the rotary movement of the rotary part (51) and with a rotary transmitter system (64) through which the eddy current transducers (60) are electrically connected to an electronic evaluation unit, characterized in that magnetizing means are provided for magnetizing the test material (62) in its longitudinal direction within a test area provided, with a magnetizing coil (80) surrounding the test material (62) for producing a magnetic flux and with magnetic flux conductors introducing the magnetic flux into the test material (62) and that the magnetic flux conductors are constituted by correspondingly dimensioned parts of the housing (10) and the hollow shaft (40), which are in each case made from magnetically conductive material and that for homogenizing the magnetic field in the test area is provided a homogenizing ring made from magnetically conductive material surrounding the test material (62) and placed between the magnetizing coil (80) and the eddy current transducers (60).

2. Rotary head according to claim 1, characterized in that replaceable protective sleeves (84,86,100) carried by the housing (10) and made from magnetically conductive material with a bore adaptable to the diameter of the test material (62) also serve as magnetic flux conductors.

3. Rotary head according to claim 2, characterized in that one of the protective sleeves (86) projects into the bore of the hollow shaft (40).

4. Rotary head according to claim 3, characterized in that at at least one point between the protective sleeve (86) and the hollow shaft (40) is provided a narrow air gap (88) for the transfer of the magnetic flux.

5. Rotary head according to one of the preceding claims, characterized in that the homogenizing ring (82) covering the side of the magnetizing coil (80) facing the eddy current transducers (60) with the exception of a distance from the rotation axis roughly corresponding to twice the maximum radial distance of the eddy current transducers (60) from the rotation axis.

6. Rotary head according to one of the preceding claims, characterized in that the homogenizing ring (82) is in magnetically conducting connection with the parts of the housing (10) conducting the magnetic flux.

7. Rotary head according to one of the preceding claims, characterized in that the bore of the protective sleeves (84,86,100) is wholly or partly lined with a thin layer (90,92,118) of magnetically non-conducting material.

8. Rotary head according to one of the preceding claims, characterized in that the rotary part (51) has a rotary disk (50) firmly connected to the hollow shaft (40) and on which are suspended the eddy current transducers (60) and which is made from magnetically non-conducting material.

9. Rotary head according to one of the preceding claims, characterized in that a fixed eddy current transducer arrangement (102) is also installed in the test area traversed by the magnetic flux.

10. Rotary head according to claim 9, characterized in that the fixed eddy current transducer arrangement (102) is installed in the interior of a protective sleeve (100).

## Revendications

1. Tête rotative pour explorer, à l'aide de générateurs de courants de Foucault (60), la surface d'un produit métallique (62) de forme allongée devant être contrôlé, comprenant un boîtier (10), une partie tournante (51), à laquelle sont fixés les générateurs de courants de Foucault (60) et qui comporte un arbre creux (40) convenant pour le passage du produit à contrôler (62) et monté rotatif sur le boîtier (10), des moyens d'entraînement (26) pour produire le mouvement rotatif de la partie tournante (51), ainsi qu'un système rotatif de transmission (64), à travers duquel les générateurs de courants de Foucault (60) sont reliés électriquement à une unité électronique d'exploitation, caractérisée en ce
que des moyens d'aimantation sont mis à disposition pour aimanter le produit (62) dans le sens de sa longueur à l'intérieur d'une zone de contrôle prévue à cet effet, moyens qui comprennent une bobine d'aimantation (80) qui entoure le produit (62) et est destinée à générer un flux magnétique, de même que des conducteurs de flux magnétique qui introduisent le flux magnétique dans le produit (62) à contrôler,
que l'on utilise, en tant que conducteurs de flux magnétique, des parties du boîtier (10) dimensionnées en conséquence et l'arbre creux (40), lesquels sont faits de matériau magnétiquement conducteur, et que, pour homogénéiser le champ magnétique dans la zone de contrôle, un anneau d'homogénéisation (82) en matériau conducteur magnétique, anneau qui entoure le produit (62) dans la zone de contrôle, est placé entre la bobine d'aimantation (80) et les générateurs de courants de Foucault (60).

2. Tête rotative selon la revendication 1, caractérisée en ce que des manchons protecteurs (84, 86, 100) interchangeables en matériau conducteur magnétique et dont le perçage est adaptable au diamètre du produit (62) à contrôler, servent également de conducteurs de flux magnétique, ces manchons étant portés par le boîtier (10).

3. Tête rotative selon la revendication 2, caractérisée en ce que l'un des manchons protecteurs (86) fait saillie dans le perçage de l'arbre creux (40).

4. Tête rotative selon la revendication 3, caractérisée en ce qu'un entrefer étroit (88) pour la transmission du flux magnétique est prévu à au moins un endroit entre le manchon protecteur (86) et l'arbre creux (40).

5. Tête rotative selon une des revendications précédentes, caractérisée en ce que l'anneau d'homogénéisation (82) recouvre le côté dirigé vers les générateurs de courants de Foucault (60) de la bobine d'aimantation (80) jusqu'à une distance de l'axe de rotation qui correspond à peu près au double de la distance radiale maximale séparant les générateurs de courants de Foucault (60) de l'axe de rotation.

6. Tête rotative selon une des revendications précédentes, caractérisée en ce que l'anneau d'homogénéisation (82) est en liaison magnétique conductrice avec les parties du boîtier (10) conduisant le flux magnétique.

7. Tête rotative selon une des revendications précédentes, caractérisée en ce que les manchons protecteurs (84, 86, 100) sont revêtus entièrement ou partiellement, dans leur perçage , d'une mince couche (90, 92, 118) de matériau non conducteur magnétique.

8. Tête rotative selon une des revendications précédentes, caractérisée en ce que la partie tournante (51) comporte un disque tournant (50) relié rigidement à l'arbre creux (40), disque auquel sont suspendus les générateurs de courants de Foucault (60) et qui est fait d'un matériau non conducteur magnétique.

9. Tête rotative selon une des revendications précédentes, caractérisée en ce qu'un système stationnaire de générateurs de courants de Foucault (102) est monté en plus dans la zone de contrôle traversée du flux magnétique.

10. Tête rotative selon la revendication 9, caractérisée en ce que le système stationnaire de générateurs de courants de Foucault (102) est monté à l'intérieur d'un manchon protecteur (100).
